# EUROPEAN PATENT APPLICATION

(11) **EP 1 872 970 A1**
(43) Date of publication of application: **02.01.2008**
(21) Application number: 06380180.7
(22) Date of filing: 26.06.2006
(51) Int. Cl.: B44D 5/00, B44C 1/00, B44C 1/04, B05D 5/00, B23K 26/00

(54) **Procedure for decoration of ceramic pieces**

(71) Applicant: Estudio Ceramico, S.L., 12130 San Juan de Moro, (Castellon) (ES)
(72) Inventor: Duran Bosch, Angel, 12130 San Juan de Moro (Castellón) (ES)
(74) Representative: Canadell-Isern, Roberto

(57) **Abstract**

The purpose of this Patent is a "Procedure for decoration of ceramic pieces", whose use is explicitly stated in the title of the invention.

The procedure includes the following operations:

Preliminary surface treatment of the pieces, by any known procedure (enameling, silkscreen process), to give them chromatic variation.

Physical deposition of metallic salt or metal vapors (PVD) over the whole surface of the piece.

Striking a laser beam on the surface, in order to partially or totally eliminate the deposited PVD layer via computer and optical laser beam control, so that the decorative figures are created in combination with the ornamental motifs and chromatic variation formed by the previous surface treatment.

## Description

### PURPOSE

The purpose of the invention protected by this Patent is a "Procedure for decoration of ceramic pieces".

### BACKGROUND

At present, the only known way to combine ceramic effects with PVD technology has been the procedure claimed in European Patent No. 04380024.2, which is also owned by Estudio Cerámico S. L.

That claimed procedure includes the following operations:
Preliminary surface treatment of the pieces, by any known procedure (enameling, silkscreen process), to give them chromatic variation.
Application of removable adhesive material, to form the elected decorative motifs ("mask").
Physical deposition of metallic salt or metal vapors (PVD) over the whole surface of the piece, including the mask.
Manual or automatic removal of the mask, partially uncovering the treated surface (by enamei or silkscreen process) of the piece, with the ornamental motifs and chromatic variation formed by the previous surface treatment.

### DESCRIPTION OF THE INVENTION

The claimed procedure is preferentially applicable to ceramic pieces with a very wide range of features, both in the production process (single firing, double firing, third firing) and in preliminary surface treatment (enamel, slip, silkscreen) or shaping (shims, friezes, moldings, etc.).

The purpose of the procedure covered by this Patent is, as indicated by its title, the surface decoration of pieces to which it is applied, creating freely elected decorative motifs on them but including the novelty of the use of new technologies and simplification of the procedure described above.

### The procedure includes the following operations:

Preliminary surface treatment of the pieces, by any known procedure (enameling, silkscreen process) to give them chromatic variation.

Physical deposition of metallic salt or metal vapors (PVD) over the whole surface of the piece.

Striking a laser beam on the surface, in order to partially or totally eliminate the deposited PVD layer via computer and optical laser beam control, so that the decorative figures are created in combination with the ornamental motifs and chromatic variation formed by the previous surface treatment.

No drawings accompany the report for this Patent, as the ceramic pieces obtained with the described procedure coincide with those obtained by the procedure in European Patent No. 04380024.2.

### DESCRIPTION OF A PREFERENTIAL EXECUTION

To clearly demonstrate the advantageous nature and scope of application of the "Procedure for decoration of ceramic pieces" which is the purpose of the claimed invention, following is a description of the operations involved in the procedure and the sequence of their execution, which is the same sequence used to describe them.

The procedure includes the following operations:
Preliminary surface treatment of the pieces, by any known procedure (enameling, silkscreen process), to give them chromatic variation.
Physical deposition of metallic salt or metal vapors (PVD) over the whole surface of the piece.
Striking a laser beam on the surface, in order to partially or totally eliminate the deposited PVD layer via computer and optical laser beam control, so that the decorative figures are created in combination with the ornamental motifs and chromatic variation formed by the previous surface treatment.

Therefore, application of the described procedure obviates the operation of applying adhesive material ("mask") with formation of the elected ornamental motifs and subsequent removal thereof to uncover the treated surface of the piece.

## Claims

1. "Procedure for decoration of ceramic pieces", **characterized by** the fact that it involves the following operations, executed in the same sequence as used to describe them:
Preliminary surface treatment of the pieces, by any known procedure (enameling, silkscreen process), to give them chromatic variation.
Physical deposition of metallic salt or metal vapors (PVD) over the whole surface of the piece.
Striking a laser beam on the surface, in order to partially or totally eliminate the deposited PVD layer via computer and optical laser beam control, so that the decorative figures are created in combination with the ornamental motifs and chromatic variation formed by the previous surface treatment.
